# EUROPEAN PATENT SPECIFICATION

(11) **EP 3 404 870 B1**
(45) Date of publication and mention of the grant of the patent: **12.01.2022**
(21) Application number: 17197938.8
(22) Date of filing: 24.10.2017
(51) Int. Cl.: H04L 12/24, H04L 12/28

(54) **HIERARCHICAL WIRELESS POWER MANAGEMENT SYSTEM AND METHOD, AS WELL AS REMOTE CONTROL DEVICE AND SLAVE CONTROLLER USED THEREIN**
SYSTEM UND VERFAHREN ZUR HIERARCHISCHEN VERWALTUNG VON DRAHTLOSEM STROM SOWIE FERNSTEUERUNGSVORRICHTUNG UND SLAVE-STEUERGERÄT DAFÜR
SYSTÈME ET PROCÉDÉ DE GESTION D'ÉNERGIE SANS FIL HIÉRARCHIQUE, AINSI QUE DISPOSITIF DE COMMANDE À DISTANCE ET ORGANE DE COMMANDE ESCLAVE UTILISÉ EN SON SEIN

(30) Priority: 19.05.2017 TW 106116768; 21.08.2017 TW 106128311
(43) Date of publication of application: 21.11.2018
(73) Proprietor: Team Young Technology Co., Ltd., 32070 Taoyuan City (TW)
(72) Inventor: LAI, Chien-Chou, 32070 TAOYUAN CITY (TW); LIN, Tz-Min, 32070 TAOYUAN CITY (TW); FAN, Ke-Fan, 32070 TAOYUAN CITY (TW); WANG, Dy-Cheng, 32070 TAOYUAN CITY (TW)
(74) Representative: dompatent von Kreisler Selting Werner - Partnerschaft von Patent- und Rechtsanwälten mbB

(56) References cited:
- US-A1- 2013 169 168
- US-A1- 2014 070 926
- US-A1- 2015 028 998
- US-A1- 2015 312 210

## Description

### BACKGROUND OF THE INVENTION

### 1. Field of the Invention

The present invention relates to a power management technology and more particularly to a hierarchical wireless power management system and method, as well as a remote control device and a slave controller used therein.

### 2. Description of the Related Art

In a conventional arrangement, a power line wiring in a house must consider positions of power switches so as to provide a convenient operation to a user, and most of the power switches are configured to a control matching of one to one or multiple to one for respective appliances. For example, for the lighting in a house, a power switch is used to control a lamp or a number of lamps. Sometimes, multiple power switches are also used to control one or more lamps. However, the wiring for this kind of control matching not only needs to fulfill a distance of the power line to the lamp, but also needs to fulfill a distance from the lamp to the power switch. Moreover, once the wiring was completed, it is not easy to change the positions of the power switches or sockets, which in turn results in an inconvenient situation.

Furthermore, most of the factories or commercial buildings are spacious, and the power switches are scattered over many places. Sometimes, for a new managing person, it is not easy to find all of the power switches, and thus results in a problem to manage power.

Currently, there are some power management methods that allow managers to manage power connections in a configuration of a host and its network-connected slave controllers by means of hand-held devices. In this kind of management methods, a machine code or identification code of a slave controller is set during manufacturing in factory, and the identification code cannot be arbitrarily changed by the users. This kind of management methods thus have a problem that the scope of applying remote control is not easy to be expanded, and a multi-level management is not able to be achieved. Moreover, the signal transmission by means of network may be not worktable when the network connection fails, the way through network is thus easy to become an unstable factor for power management.

There is also a kind of control system using a location-based address commissioned by a user to control lighting devices in group, such as US 2015/0028998. In this patent, a lighting device is commissioned by the user with at least one LD based upon its location distribution and its intended group. However, in such a manner, the user needs to consider a name and/or ID given for respective locations; it is very likely that the commissioned addresses in two environments are duplicated. Moreover, due to a fact that the identification code for each lighting device is in a form relevant to location hierarchies of the slave controllers in a hierarchical architecture, the number of digits for respective LBA/LDs will change per different number of location hierarchies set by different users. It will result of a difficulty of signal receiving and recognition for a circuit system. Furthermore, when the user is planning a hierarchical group of the lighting devices based upon locations, it also need to contemplate or identify an ID for each location or group and thus is not convenient.

### SUMMARY OF THE INVENTION

The present invention has been accomplished under the circumstances in view of the aforesaid. It is a main object of the present invention to provide a hierarchical wireless power management system and method as disclosed in the appended claims, which can be performed without through a network, omitting the conventional power switches and reducing the use of power lines.

To achieve this and other objects of the present invention, a remote control device is provided as as claimed in independent claim 1.

To achieve this and other objects of the present invention, the present invention also provides a slave controller as claimed in independent claim 10.

To achieve this and other objects of the present invention, the present invention also provides a hierarchical wireless power management system, as claimed in claim 13, which comprises the above-described remote control device and slave controllers.

To achieve this and other objects of the present invention, the present invention also provides a remote control management method as claimed in independent claim 14.

Thus, the managing user can freely and flexibly increase or reduce the number of hierarchical groups without worrying about the wiring configuration of the power lines, and can also control the slave controllers individually or in a hierarchical group. Moreover, the managing user needs not to remember or edit the identification codes of the slave controllers. The system itself can randomly generate the identification codes. Through the remote control device, the managing user can intuitively and easily controls the power supply status of each group of slave controllers or appliances, and the wireless control can be achieved without through the internet.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 illustrates an exemplary hierarchical architecture of salve controllers adapted for appliances in a school in accordance with the present invention.
FIG. 2 illustrates the outer appearance of a slave controller in accordance with the present invention.
FIG. 3 is a circuit block diagram of the slave controller in accordance with the present invention.
FIG. 4 illustrates the outer appearance of a remote control device in accordance with the present invention.
FIG. 5 is a circuit block diagram of the remote control device in accordance with the present invention.
FIG. 6 is a schematic view of applying a hierarchical wireless power management system in accordance with the present invention.

### DETAILED DESCRIPTION OF THE INVENTION

The constituent elements of the hierarchical wireless power management system of the present invention and the effects of the present invention will now be described with reference to the annexed drawings, wherein the components, the size and the appearance of the hierarchical wireless power management system are only intended to illustrate the technical features of the present invention and are not intended to limit the present invention.

The hierarchical wireless power management system does not achieve power management through a network such as power network, communication network, wireless network (WiFi) or local area network. The hierarchical architecture of the slave controllers used in the present invention is free to be increased and decreased in size of a hierarchical group and is not constrained by the locations of indoor switches and sockets. The number of the power lines can be reduced.

The hierarchical wireless power management system can be used to control the power supply to many kinds of electrical appliances, such as sockets, electronic locks, motor switches, lamps, loudspeakers, air conditioners, electric fans, electronic gates and audio and video equipments etc. in a school, shopping mall, sports field, factory or home. The "control" means the operation of turning on/off the power supply, or regulating the rate of the power supply to the electrical appliance. The motor switch may be used to control the forward and reverse rotation of a motor, in particular a motor used for rolling a roll-up door or an electric curtain.

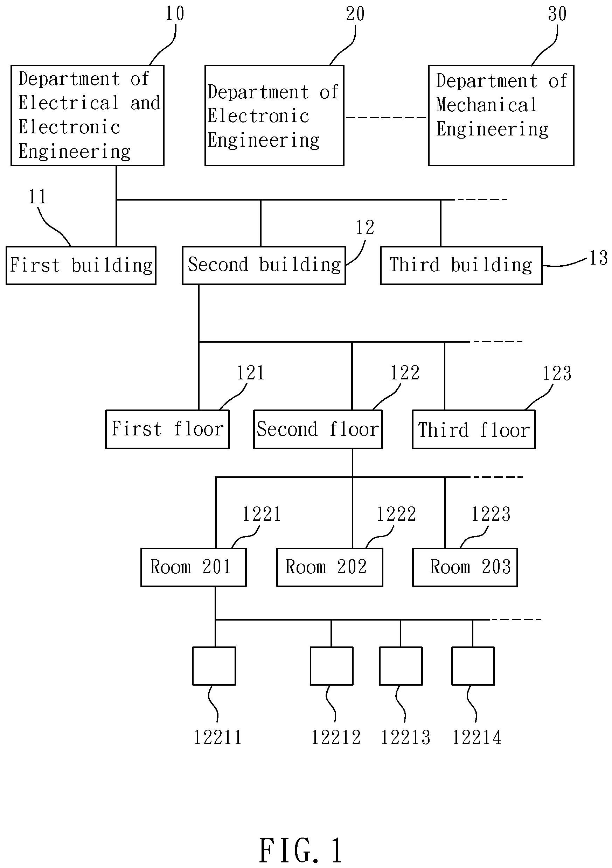

Taking school as an example, the hierarchical architecture used in the present invention is illustrated in FIG. 1. In this example, the area to be applied for the hierarchical architecture is a school, the power supply for all electrical appliances in the school is classified with the hierarchical architecture, and the hierarchical architecture may include a plurality of hierarchical groups. For example, a number of departments are defined as the highest hierarchical groups, referenced by **10, 20,** and **30.** A number of buildings in one department 10 are defined as secondary highest hierarchical groups, referenced by **11, 12, and 13.** A number of floors in one building 12 are defined as middle-level hierarchical groups, referenced by **121, 122,** and **123.** A number of classrooms or spaces in one floor 122 are defined as smaller-level hierarchical groups, referenced by **1221, 1222,** and **1223.** At final, a number of spatial divisions in one classroom 1221 can be defined as smallest-level-level hierarchical groups, referenced by **12211, 12212, 12213, and 12214** and so on.

The hierarchical groups that are not expanded in FIG. 1 can be classified or defined into multiple hierarchical groups of different levels. The hierarchical group planning described above is not a limitation. In this embodiment, the hierarchical groups are illustrated as relating to power supply in the area.. The groups in the area can also be a number of electrical appliances or a same type of electrical appliances. For example, the smallest-level hierarchical group **12211** comprises multiple electrical sockets; the smallest-level hierarchical groups **12212, 12213** respectively comprise different amounts of lamps; the smallest-level hierarchical group **12214** comprises multiple electrical fans; and the smaller-level hierarchical group **1221** comprises all the electrical appliances of the smallest-level hierarchical groups **12211-12214.** That is, the power supply to the smallest-level hierarchical groups **12211-12214** can be controlled through controlling the power supply to the smaller-level hierarchical group **1221.**

The hierarchical wireless power management system comprises a plurality of slave controllers **50** and a remote control device **70.** These slave controllers **50** are respectively electrically connected with the individual electrical appliances (not shown) in the aforesaid hierarchical groups of the hierarchical architecture for controlling the operation of the respective electrical appliances, including switching or action. The settings of the hierarchical groups of the hierarchical architecture are determined according to the installation locations or functions of the slave controllers **50.** Every individual slave controller **50** can appear in different hierarchical groups to achieve different control purposes or needs. The application and connection of the slave controllers **50** will be explained later. The remote control device **70** is adapted for generating a wireless control signal for controlling one slave controller **50** or a number of the slave controllers **50,** driving the slave controller **50** or the multiple slave controllers **50** to regular its or their power output ratio and action.

The remote control device **70** allows the managing user to do settings related to the hierarchical architecture of the slave controllers by means of the remote control device 70 itself and to store the settings, and can also receive and store hierarchical architecture settings that were made by the managing user from an external device. These settings related to the hierarchical architecture can, for example, comprise definitions of the appliances associated to these slave controllers, corresponding identification codes thereof, and allocated hierarchical groups in the hierarchical architecture. The definitions of the slave controllers can be the names or model codes of the appliances connected to respective slave controllers that the user can intuitively identify. The settings of the hierarchical architecture can also include a setting for management authority. The remote control device can be used for doing an authorized management to the hierarchical groups in the hierarchical architecture that are authorized to be managed according to the management authority setting. Furthermore, the authority of one hierarchical group in the hierarchical architecture is preferred to include authorities to subgroups in such a hierarchical group.

The remote control device **70** controls the switching or action state of the slave controllers **50** under a hierarchical architecture mode according to the settings of the hierarchical architecture related to the slave controllers, and can do a hierarchical group control according to the hierarchical architecture. For example, the remote control device **70** can control the slave controller **50** to do a turn ON or OFF action by means of a control signal. Furthermore, the remote control device **70** can also execute a local ON/OFF control to directly control an adjacent slave controller **50** without a selection on the nearby slave controller 50. Under this function, the transmission power of such a control signal from the remote control device **70** is lower than the transmission power of a general control signal for controlling one particular selected slave controller. This function can also be set to be only applicable to the slave controllers in one selected or particular hierarchical group of the hierarchical architecture.

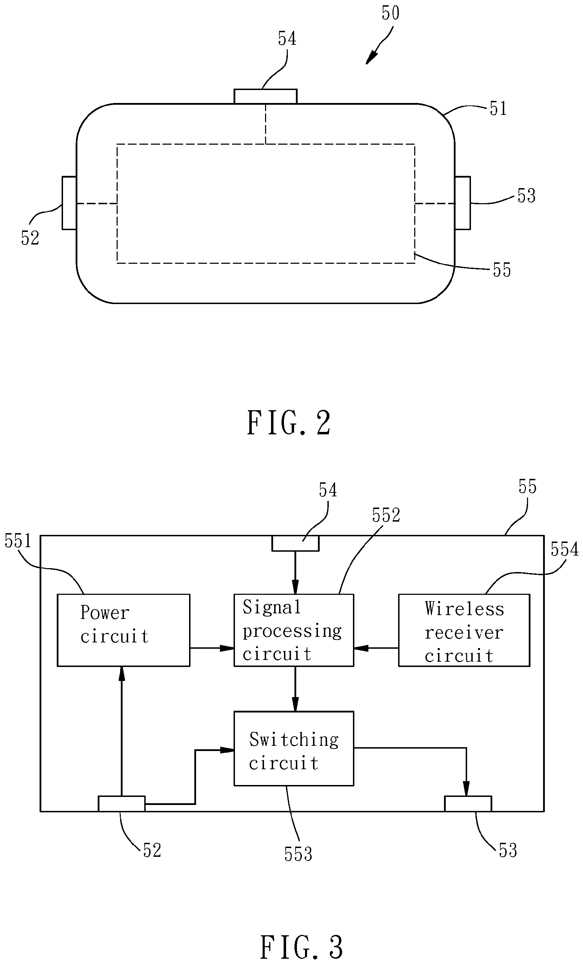

Referring to FIG. 2 and FIG. 3, FIG. 2 illustrates the outer appearance of the slave controller **50** and FIG. 3 illustrates the circuit block diagram of the slave controller **50.** As illustrated, the slave controller **50** comprises a housing **51,** a power input connector **52,** a power output connector **53,** a write-in interface **54,** and an operating unit **55.** The operating unit **55** is mounted inside the housing **51.** The power input connector **52,** the power output connector **53** and the write-in interface **54** are respectively electrically connected to the operating unit **55.** The power input connector **52** is for connection to a power cable. The power output connector **53** is adapted for connection to a power input terminal of an electrical appliance.

The operating unit **55** comprises a power circuit **551,** a signal processing circuit **552,** a switching circuit **553** and a wireless signal receiver circuit **554.** The power circuit **551** is electrically coupled with the power input connector **52** and the signal processing circuit **552.** The switching circuit **553** connects the signal processing circuit **552,** the power input connector **52** and the power output connector **53.** The wireless signal receiver circuit **554** is electrically connected to the signal processing circuit **552,** and adapted for receiving a control signal having a corresponding identification code.

The signal processing circuit **552** controls the operation of the switching circuit **553** according to the control signal, thereby controlling the ratio of the power in the power cable output to the power output connector **53,** or causing the switching circuit to generate an output for an action of the appliance. The ratio of the power output includes non power output, full power output, or a specific percentage of power output. The specific percentage of power output can be controlled by means of phase control or other known method. Since the control method is of the known art, its detailed description is omitted hereby.

The signal processing circuit **552** is electrically coupled with the write-in interface **54,** and can store an identification code that is randomly set by the managing user and received through the write-in interface. The identification code stored in the signal processing circuit **552** can be deleted, and a new identification code can be written into the signal processing circuit **552** through the write-in interface **54.** Furthermore, in this embodiment, the slave controller **50** does not need to send out its identity information before receiving the assigned identification code, and the randomly set identification code can be immediately transmitted to the slave controller 50 in the initial stage.

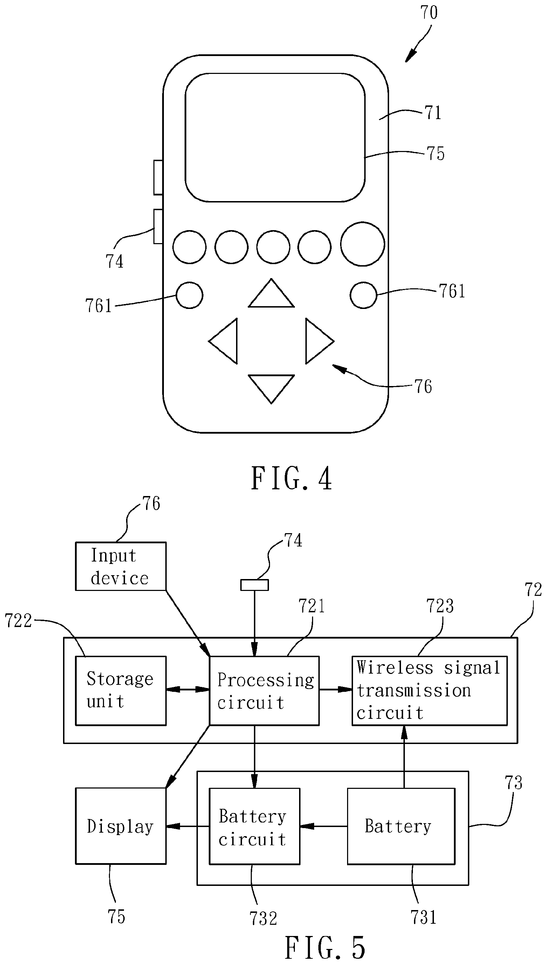

Referring to FIGS. 4 and 5, FIG. 4 illustrates an outer appearance of the remote control device **70** and FIG. 5 illustrates a circuit block diagram of the remote control device **70.** The remote control device **70** comprises a casing **71,** a control module **72,** a power supply device **73,** an input/output connection interface **74,** a display **75** and an input device **76** working as an input module. The control module **72** and the power supply device **73** are mounted inside the casing **71.** The control module **72** is electrically coupled with the power supply device **73,** the input/output connection interface **74,** the display **75** and the input device **76** respectively. The input device **76** can be a keyboard, button, microphone or touch control module. The touch control module can be assembled with the display **75** to create a touch display for data input and display.

The power supply device **73** is electrically coupled with the display **75,** and comprises a battery **731** and a battery circuit **732** electrically coupled with the battery **731,** so as to provide a necessary working power to the remote control device **70.**

The control module **72** controls the hierarchical groups according to the management authority mentioned above, and comprises a processing circuit **721,** a storage unit **722** and a wireless signal transmission circuit **723.** The processing circuit **721** is electrically coupled with the power supply device **73,** the storage unit **722,** the input device **76,** the display **75** and the wireless signal transmission circuit **723** respectively. The storage unit **722** is adapted for storing the settings for the slave controllers, including the hierarchical architecture, the identification codes of the slave controllers and the names (identity information) corresponding to the respective identification codes. The storage unit **722** further stores information about the management authority. The management authority defines a scope that can be controlled by the remote control device **70** under the hierarchical architecture. The scope can refer to the quantity of the hierarchical groups. The wireless signal transmission circuit **723** comprises an antenna and a RF circuit for transmitting and receiving RF signals.

The processing circuit **721** performs a hierarchical management according to the management authority, and generates a control signal in response to an input command (selection signal) from the input device **76.** The wireless signal transmission circuit **723** is adapted for transmitting and receiving the control signal. The hierarchical architecture is the architecture shown in FIG. 1. Providing different management authorities to different remote control devices **70** enable the remote control devices **70** to perform different power supply managements according to respective defined authorities. In other words, multiple remote control devices with multiple authority scopes can be used for a same hierarchical architecture mentioned above.

The processing circuit **721** further comprises an identification code generating module for allowing the managing user himself to set identification codes for respective slave controllers and to drive the identification code generation module to randomly generate the identification codes. The identification codes are randomly generated by the identification code generation module itself. When the random numbers are up to tens of millions, the identification codes are very difficult to repeat. In this embodiment, the way to write an identification code to a slave controller is to connect the write-in interface of the slave controller and the input/output connection interface **74** of the remote control device **70** first, and then to enable the processing circuit **721** to write the identification code randomly generated by the identification code generation module into the signal processing circuit of the slave controller. Furthermore, the managing user can use the input device **76** of the remote control device **70** to give a name (identity information) to a corresponding slave controller, enabling the slave controller to be defined again.

Similarly, the identification code generation module can delete the identification code stored in the signal processing circuit of the slave controller. Therefore, the managing user can install a redefined slave controller in a newly planned hierarchical architecture for power management. In general, one skilled in the art could understand that the core of the control module described in this embodiment is to generate a control signal for wireless control to, based upon the selection signal and settings comprising a hierarchical grouping distribution architecture changeably set by a managing user and respective corresponding identification codes of the slave controllers set by the managing user, manage the operations of slave controllers with a capability of doing a group controlling under the hierarchical architecture. This core of the control module can also be implemented by incorporating a software of doing such a core into a general hardware.

Although, in this embodiment, the identification code is written into the slave controller through the remote control device **70,** but the identification code may be written to the slave controller through another device, for example, by the computer after it is set thereby. Therefore, writing the identification code is not limited to be done by the remote control device, and the writing can be achieved by a wireless manner. The hierarchical architecture setting of the slave controllers may also be inputted by a computer, a mobile phone or a PDA, etc., and the finished settings of the hierarchical architecture of the slave controllers can be transmitted to the remote control device through the input/output connection interface **74** and be stored in the storage unit of the remote control device. Therefore, the setting of the hierarchical architecture of the slave controllers is not limited to be done by means of the remote control device. Therefore, whenever a name of a slave controller is to be input, managing user only needs to enter the name of the slave controller without arranging or knowing its ID. The user thus can intuitively change the name of the slave controller. In other words, the input/output connection interface **74** can transmit an identification code to a corresponding slave controller without knowing the identity information of the slave controller first, and can be used to input the settings and identifying information, such as names or model numbers, of the slave controllers that are set by the user The measure to transmit data to the remote control device through the input/output connection interface **74** can be achieved by a wired manner or a wireless manner, and this is a known technology, and thus is not described in details..

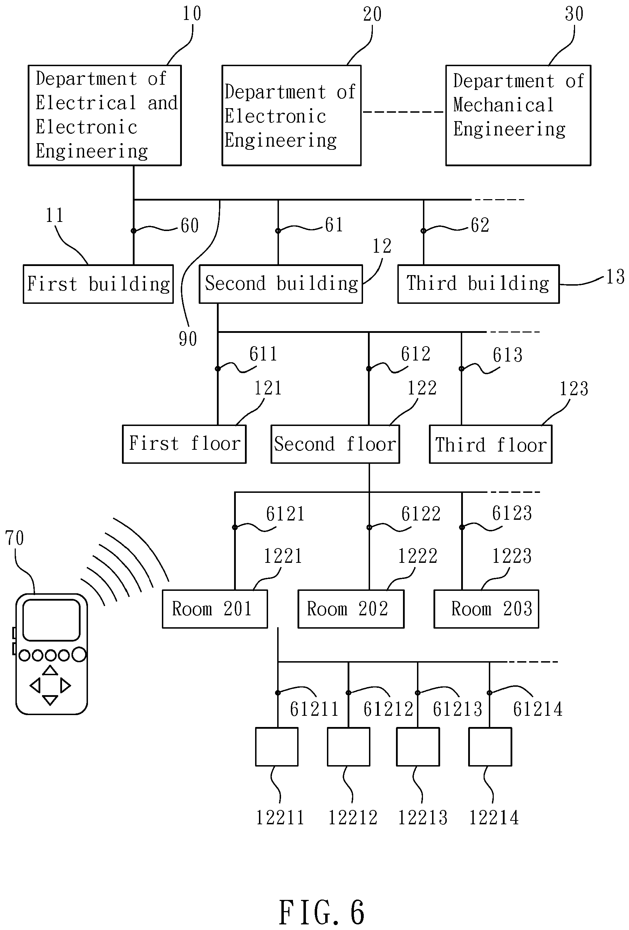

Referring to FIG. 6, the remote control management method according to one embodiment, which is not part of the invention as claimed but it is useful for understanding the invention, comprises the steps outlined hereinafter. At first, installation locations or functions of slave controllers **60-61214** are input so as to establish a hierarchical architecture thereof. The hierarchical architecture defines the relationship of the slave controllers in the hierarchical architecture. Fig. 6 also shows a representative slave controller for each group in an end level. In this step, the managing user defines each slave controller. Thereafter, the managing user conducts a setting of an identification code for each slave controller. In this step, the managing user can use the above-described method to randomly generate respective identification codes for respective slave controllers, and can define corresponding names (definitions) for respective slave controllers using the remote control device **70** so as to complete and store the settings of the slave controllers (i.e., storing the name, identification code and corresponding hierarchical group for each slave controller). Thereafter, a number of selected controls are output by the remote control device **70.** The operations of the slave controllers **60-61214** are thus controlled in accordance with the hierarchical architecture and the identification codes for respective slave controllers. In this step, user uses the remote control device **70** to control the power supply or operation status of a hierarchical group or a slave controller.

Therefore, each of the slave controllers can be increased or decreased by means of the remote control device itself or an external computer. In conclusion, the core of the remote control management method comprises a receiving step for receiving a selection signal, and a control step for generating a control signal for wireless control to, based upon the selection signal and settings comprising a hierarchical grouping distribution architecture changeably set by a managing user and respective corresponding identification codes of the slave controllers set by the managing user, manage the operations of slave controllers with a capability of doing a group controlling under the hierarchical architecture.

Furthermore, the remote control device **70** can work under a certain management authority. For example, a remote control device **70** having a highest management authority may manage all of the slave controllers. A remote control device 70 having a middle management authority can control the slave controllers in hierarchical groups **11, 12,** and **13.** That is, a remote control device **70** having an authority to hierarchical group **12** may control the slave controllers **61-61214,** but not the slave controllers **60** and **62.** Similarly, the management authority of a remote control device can be limited to a hierarchical group of one floor or a relatively smaller group. The scope of the management authority is not limited to that described in this embodiment. In other words, for a group that is not authorized to a remote control device, the remote control device cannot control such a group. Thus, different users with different remote control devices can perform different management controls under a same hierarchical architecture. Furthermore, each management authority setting can be set to be effective for a specific period of time.

In FIG. 6, all of the slave controllers **60-61214** are connected with power lines **90** and allocated at a front side of respective hierarchical groups **11-12214** for controlling the power supply to respective hierarchical groups **11-12214.** For example, when the user uses the input device of the remote control device **70** to switch off the power supply to the hierarchical group **12211,** the remote control device **70** emits a control signal having an identification code corresponding to slave controller 61211, and the wireless signal receiver circuit of the slave controllers within an effective control range of the remote control device **70** will receive the control signal having the identification code. However, only the signal processing circuit of the slave controller **61211** will cut off the power supply to the hierarchical group **12211** according to the control signal. All the sockets in this hierarchical group **12211** are turned off, and other slave controllers remain unchanged.

Furthermore, the present invention also provides a local switching control function for a direct local control. As illustrated in FIG. 4, the input device **76** of the remote control device **70** further comprises a local ON/OFF button **761.** In this embodiment, when the remote control device **70** is put in a place in room #201 **1221** of second floor **122,** and a local ON/OFF button in the remote control device **70** is pushed to do a local switching control function, the local control signal of the remote control device **70** will be sent to all slave controllers within a selected hierarchical group. However, the transmission power of this local control signal is lower than that of a normal control signal for controlling a specifically selected slave controller. This local control signal is effective only to a slave controller, preferred within a selected hierarchical group, within the room #201 **1221** of second floor **122.** In this situation, the remote control device **70** can directly control a specific slave controller near or adjacent to the remote control device 70 without through a selection to the specific slave controller adjacent thereto. For example, a switching state of the slave controller **61211** near the remote control device 70 can be controlled. In this embodiment, the distance for the so-call "near or adjacent" could be 1-3 meters. However, this distance is not limited to the distance illustrated in this embodiment. Furthermore, the number of slave controllers to be effectively controlled is determined subject to the actual effective distance of the wireless local control signal and the selected hierarchical group. Of course, as a variant example, it is also possible to effect a control to a slave controller by means of distance condition only regardless a selection to a hierarchical group. In this case, the effective range of the local control signal for this local switching control function must be properly adjusted.

In this embodiment, the control signal of the remote control device **70** is preferably a RF signal. RF signals have better penetration and can travel far distances, so they can cover a larger space. Furthermore, the wireless control according to this embodiment of the present invention needs not to be established on a network architecture, its implementation is relatively simple and direct and will not be hacked. In particular, the identification code according to this embodiment of the present invention is randomly generated by the control device in a random manner. It may provide millions of different random codes. Therefore, this method is advantageous for slave controllers that require a safety consideration.

In view of the above, the slave controller uses an identification code randomly provided by a managing user through a remote control device, without a need to preset such an identification code during manufacturing. Thus, the wireless hierarchical power management system of the present invention is more flexible, easy to be expanded than the conventional designs, and can reduce the probability of duplicate identification codes. Moreover, the managing user can limit the scope of the authorized management in a certain remote control device subject to the setting of the authority in the remote control device. The user can use the remote control device to execute hierarchical group power control, and the problem in convention designs that needs to find the switch corresponding to the appliance to be controlled is resolved, and the use of power lines is reduced.

Although a particular embodiment of the present invention has been described in detail for purposes of illustration, various modifications and enhancements may be made without departing from the scope of the invention. Accordingly, the invention is not to be limited except as by the appended claims.

## Claims

1. A remote control device (70) for controlling a plurality of slave controllers (50, 60-61214), said remote control device (70) comprising an input module (76) for receiving a selection signal resulted from a selection to at least one selected slave controller on settings that are stored in the remote control device (70), related to the plurality of slave controllers (50, 60-61214), and have identification codes corresponding to the slave controllers; and
a control module (72) for generating a control signal containing at least one identification code for the at least one selected slave controller (50, 60-61214) to wirelessly control operations of the at least one selected slave controller based upon the selection signal and the settings, and being **characterized in that**:
the settings comprise a hierarchical grouping architecture consisting of a plurality of hierarchical groups (10, 20, 30, 12, 122, 1221) defined by a managing user for controlling the slave controllers (50, 60-61214), and respective corresponding identification codes for the plurality of the slave controllers (50, 60-61214) each being a random number that is automatically set by following a setting of a slave controller (50, 60-61214) and is able to be identified for at least one of the slave controllers (50, 60-61214),
wherein the hierarchical grouping architecture defines the relationship of the slave controllers (50, 60-61214) in the hierarchical groups, and is changeably set by the managing user and the respective corresponding identification codes of the slave controllers (50, 60-61214) are set by the managing user, and thus the operations of the slave controllers (50, 60-61214) are controlled in accordance with the hierarchical grouping architecture and the identification codes for respective slave controllers (50, 60-61214),
wherein the identification codes are randomly generated by an identification code generation module of the control module (72), which allows the managing user himself to set the identification codes for respective slave controllers (50, 60-61214),
wherein the control module (72) is adapted to manage the operations of the slave controllers (50, 60-61214) with a capability of doing a group controlling under the hierarchical grouping architecture.

2. The remote control device (70) as claimed in claim 1, further comprising:
a display (75) electrically coupled to said control module (72) for displaying a selection; and
a power supply device (73) coupled to said control module (72) and said display (75), said control module (72) comprising a processing circuit (721), a wireless signal transmission circuit (723) and a storage unit (722), said wireless signal transmission circuit (723) being coupled to said processing circuit (721) and adapted for transmitting said control signal to a corresponding slave controller (50, 60-61214) according to the selection signal, said storage unit (722) being coupled to said processing circuit (721) for storing the settings related to the slave controllers (50, 60-61214).

3. The remote control device (70) as claimed in claim 1, wherein said identification codes are used to control respective slave controller (60-61214) or a hierarchical group (10, 20, 30, 12, 122, 1221) to which the slave controllers (60-61214) belong in the hierarchical grouping architecture.

4. The remote control device (70) as claimed in claim 3, wherein said control module (72) comprises the identification code generation module for randomly generating said identification codes of said slave controllers (50, 60-61214) to be set into the settings and written into said slave controllers (50, 60-61214) correspondingly after finishing the settings of said hierarchical grouping architecture.

5. The remote control device (70) as claimed in claim 1, wherein the settings of said slave controllers (50, 60-61214) include a hierarchical management authority for allowing said control module (72) to manage certain hierarchical groups in said hierarchical grouping architecture according to the hierarchical management authority.

6. The remote control device (70) as claimed in claim 1, further comprising an input/output connection interface (74) adapted for setting a control relationship with the slave controllers initially by means of transmitting the identification codes to the slave controllers (50, 60-61214).

7. The remote control device (70) as claimed in claim 1, wherein said control module (72) further comprises a local switching control function for directly controlling a slave controller (50, 60-61214) near to the remote control device (70) using a control signal activated by a local button (761) without a need to select the slave controller.

8. The remote control device (70) as claimed in claim 7, wherein a transmission power of the control signal of said remote control device (70) in said local switching control function is lower than that of a control signal for controlling a specifically selected slave controller (50, 60-61214).

9. The remote control device (70) as claimed in claim 7, wherein said local switching control function is limited to the slave controllers (50, 60-61214) in one specific hierarchical group (12, 122, 1221) of said hierarchical grouping architecture.

10. A slave controller (50, 60-61214) comprising:
a power input connector (52); a write-in interface (54) for allowing a managing user to input an identification code for the slave controller (50, 60-61214); and an operating unit (55) connecting said power input connector (52) and said write-in interface (54), said operating unit (55) comprising a signal processing circuit (552), a switching circuit (553) and a wireless signal receiver circuit (554), said signal processing circuit (552) being adapted for storing said identification code, said switching circuit (553) connecting said signal processing circuit (552) and said power input connector (52), said wireless signal receiver circuit (554) being adapted for receiving a control signal corresponding to said identification code and electrically connected to said signal processing circuit (552), said signal processing circuit (552) being adapted for regulating the operation of said switching circuit (553) and doing an output according to said control signal, being **characterized in that**
the identification code is a random number that is set automatically by following a setting of the slave controller (50, 60-61214) in a hierarchical grouping architecture defined by a managing user for controlling the slave controller (50, 60-61214) and is able to be identified for the slave controller (50, 60-61214),
wherein the identification code is randomly generated by an identification code generation module of a control module (72) comprised in a remote control device (70), which allows the managing user himself to set the identification code for the slave controller (50, 60-61214),
wherein the control module (72) is adapted to manage the operation of the slave controller (50, 60-61214) with a capability of doing a group controlling under a hierarchical grouping architecture,
wherein the hierarchical grouping architecture defines the relationship of slave controllers (50, 60-61214) in the hierarchical groups, and is changeably set by the managing user and the respective corresponding identification codes of the slave controllers (50, 60-61214) are set by the managing user.

11. The slave controller (50, 60-61214) as claimed in claim 10, wherein the identification code is inputted to the slave controller (50, 60-61214) under a control of the managing user and the corresponding slave controller (50, 60-61214) does not need to send out its identity information before receiving the assigned identification code.

12. The slave controller (50, 60-61214) as claimed in claim 10, wherein said identification code is used to control respective slave controller (60-61214) and a hierarchical group (10, 20, 30, 12, 122, 1221) to which the slave controller belongs in the hierarchical grouping architecture.

13. A hierarchical wireless power management system, comprising:
a plurality of remote control devices (70) as claimed in any of claims 1-9; and
a plurality of slave controllers (50, 60-61214) as claimed in any of claims 10-12 and being **characterized in that**
the authorities of the remote control devices comprise a highest management authority and a middle management authority of the hierarchical architecture, so as to limit the management of a remote control device with middle management authority to the slave controllers of the authorized hierarchical groups in the hierarchical architecture,
wherein a remote control device having the highest management authority is provided to manage all of the slave controllers, and a remote control device having the middle management authority is limited to a hierarchical group and cannot control another hierarchical group for which it is not authorized.

14. A remote control management method for managing the operation of a plurality of slave controllers (50, 60-61214), the remote control management method comprising:
a receiving step for receiving a selection signal resulted from a selection to at least one selected slave controller on settings that are stored in a remote control device (70), related to the plurality of slave controllers (50, 60-61214), and have identification codes corresponding to the slave controllers; and
a control step for generating a control signal containing at least one identification code for at least one selected slave controller to wirelessly control operations of the at least one selected slave controller, based upon the selection signal and the settings, and being **characterized in that**
the settings comprise a hierarchical grouping architecture consisting of a plurality of hierarchical groups (10, 20, 30, 12, 122, 1221) defined by a managing user for controlling the slave controllers (50, 60-61214), and respective corresponding identification codes for the plurality of the slave controllers (50, 60-61214) each Lilting being a random number that is automatically set by following a setting of a slave controller (50, 60-61214) and is able to be identified for at least one of the slave controllers (50, 60-61214),
wherein the hierarchical grouping architecture defines the relationship of the slave controllers (50, 60-61214) in the hierarchical groups, and is changeably set by the managing user and the respective corresponding identification codes of the slave controllers (50, 60-61214) are set by the managing user, and thus the operations of the slave controllers (50, 60-61214) are controlled in accordance with the hierarchical grouping architecture and the identification codes for respective slave controllers (50, 60-61214),
wherein the identification codes are randomly generated by an identification code generation module of the remote control device (70), which allows the managing user himself to set the identification codes for respective slave controllers (50, 60-61214),
wherein the remote control device (70) manages the operations of the slave controllers (50, 60-61214) with a capability of doing a group controlling under the hierarchical grouping architecture.

## Patentansprüche

1. Fernsteuervorrichtung (70) zum Steuern mehrerer Slave-Controller (50, 60-61241), wobei die Fernsteuervorrichtung (70) ein Eingabemodul (76) zum Empfangen eines Auswahlsignals, das aus der Auswahl mindestens eines ausgewählten Slave-Controllers entsprechend Einstellungen resultiert, welche in der Fernsteuervorrichtung (70) bezüglich der mehreren Slave-Controller (50, 60-61214) gespeichert sind und den Slave-Controllern entsprechende Codes aufweisen; und
ein Steuermodul (72) zum Erzeugen eines Steuersignals, das mindestens einen Identifikationscode für den mindestens einen ausgewählten Slave-Controller (50, 60-61214) aufweist, um die Operationen des mindestens einen ausgewählten Slave-Controllers basierend auf dem Auswahlsignal und den Einstellungen drahtlos zu steuern, und **dadurch gekennzeichnet, dass**
die Einstellungen eine hierarchische Gruppierungsarchitektur aus mehreren hierarchischen Gruppen (10, 20, 30, 12, 122, 1221) aufweist, welche durch einen managenden User zum Steuern der Slave-Controller (50, 60-61214) definiert sind, und jeweilige entsprechende Identifikationscodes für die mehreren Slave-Controller (50, 60-61214), die jeweils eine Zufallszahl sind, welche einer Einstellung eines Slave-Controllers (50, 60-61214) folgend automatisch eingestellt wird und in der Lage ist, für mindestens einen der Slave-Controller (50, 60-61214) identifiziert zu werden,
wobei die hierarchische Gruppierungsarchitektur das Verhältnis der Slave-Controller (50, 60-61214) in den hierarchischen Gruppen definiert und veränderbar durch den managenden User eingestellt wird, und die jeweiligen entsprechenden Identifikationscodes der Slave-Controller (50, 60-61214) durch den managenden User eingestellt werden, und somit werden die Operationen der Slave-Controller (50, 60-61214) entsprechend der hierarchischen Gruppierungsarchitektur und den Identifikationscodes für jeweilige Slave-Controller (50, 60-61214) gesteuert,
wobei die Identifikationscodes durch ein Identifikationscodeerzeugungsmodul des Steuermoduls (72) zufällig erzeugt werden, wodurch dem managenden User ermöglicht ist, die Identifikationscodes für jeweilige Slave-Controller (50, 60-61214) selbst einzustellen,
wobei das Steuermodul (72) geeignet ist, die Operationen der Slave-Controller (50, 60-61214) mit einer Fähigkeit zur Durchführung einer Gruppensteuerung unter der hierarchischen Gruppierungsarchitektur zu managen.

2. Fernsteuervorrichtung (70) nach Anspruch 1, ferner mit:
einem elektrisch mit dem Steuermodul (72) verbundenen Display (75) zum Anzeigen einer Auswahl; und
einer mit dem Steuermodul (72) und dem Display (75) verbundene Stromversorgungsvorrichtung (73), wobei das Steuermodul (72) eine Verarbeitungsschaltung (721), eine Funksignalübertragungseinheit (723) und eine Speichereinheit (722) verbunden ist, wobei die Funksignalübertragungsvorrichtung (723) mit der Verarbeitungsschaltung (721) verbunden ist und dazu geeignet ist, das Steuersignal an einen entsprechenden Slave-Controller (50, 60-61214) entsprechend dem Auswahlsignal zu übertragen, wobei die Speichereinheit (722) mit der Verarbeitungseinheit (721) zum Speichern der die Slave-Controller (50, 60-61214) betreffenden Einstellungen verbunden ist.

3. Fernsteuervorrichtung (70) nach Anspruch 1, bei welcher die Identifikationscodes zum Steuern jeweiliger Slave-Controller (60-61214) oder einer hierarchischen Gruppe (10, 20, 30, 12, 122, 1221), zu welcher die Slave-Controller (60-61214) in der hierarchischen Gruppierungsarchitektur gehören.

4. Fernsteuervorrichtung (70) nach Anspruch 3, bei welcher das Steuermodul (72) das Identifikationscodeerzeugungsmodul zum zufälligen Erzeugen der Identifikationscodes der Slave-Controller (50, 60-61214), die in den Einstellungen einzustellen und entsprechend in die Slave-Controller (50, 60-61214) zu schreiben sind, nachdem die Einstellungen der hierarchischen Gruppierungsarchitektur abgeschlossen sind.

5. Fernsteuervorrichtung (70) nach Anspruch 1, bei welcher die Einstellungen der Slave-Controller (50, 60-61214) eine hierarchische Managementautorität aufweisen, um dem Steuermodul (72) zu erlauben, bestimmte hierarchische Gruppen in der hierarchischen Gruppierungsarchitektur entsprechend der hierarchischen Managementautorität zu managen.

6. Fernsteuervorrichtung (70) nach Anspruch 1, ferner mit einem Eingabe/Ausgabe-Verbindungsinterface (74), welche dazu geeignet ist, ein Steuerungsverhältnis mit den Slave-Controllern anfänglich durch das Übertragen der Identifikationscodes an die Slave-Controller (50, 60-61214) einzustellen.

7. Fernsteuervorrichtung (70) nach Anspruch 1, bei welcher das Steuermodul (72) ferner eine lokale Schaltsteuerfunktion zum direkten Steuern eines Slave-Controllers (50, 60-61214) nahe der Fernsteuervorrichtung (70) unter Verwendung eines durch einen lokalen Knopf (761) aktivierten Steuersignals aufweist, ohne die Notwendigkeit, den Slave-Controller auszuwählen.

8. Fernsteuervorrichtung (70) nach Anspruch 7, bei welcher eine Übertragungsleistung des Steuersignals der Fernsteuervorrichtung (70) in der lokalen Schaltsteuerfunktion geringer als diejenige eines Steuersignals zum Steuern eines spezifisch ausgewählten Slave-Controllers (50, 60-61214) ist.

9. Fernsteuervorrichtung (70) nach Anspruch 7, bei welcher die lokale Schaltfunktion auf den Slave-Controller (50, 60-61214) in einer spezifischen hierarchischen Gruppe (12, 122, 1221) beschränkt ist.

10. Slave-Controller (50, 60-61214) mit:
einem Netzeingangsanschluss (52); einem Einschreib-Interface (54), um es einem managenden User zu ermöglichen, einen Identifikationscode für den Slave-Controller (50, 60-61214) einzugeben; und einer Bedieneinheit (55), welche den Netzeingangsanschluss (52) und das Einschreib-Interface (54) verbindet, wobei die Bedieneinheit (55) eine Signalverarbeitungsschaltung (552), eine Schaltschaltung (553) und eine Funksignalempfangsschaltung (554) aufweist, wobei die Signalverarbeitungsschaltung (552) geeignet ist, den Identifikationscode zu speichern, wobei die Schaltschaltung (553) die Signalverarbeitungsschaltung (552) und den Netzeingangsanschluss (52) verbindet, wobei die Funksignalempfangsschaltung (554) geeignet ist, ein dem Identifikationscode entsprechendes Steuersignal zu empfangen, und mit der Signalverarbeitungsschaltung (552) elektrisch verbunden ist, wobei die Signalverarbeitungseinheit (552) geeignet ist, den Betrieb der Schaltschaltung (553) zu regeln und einen Ausgang entsprechend dem Steuersignal auszugeben, **dadurch gekennzeichnet, dass**
der Identifikationscode eine Zufallszahl ist, die einer Einstellung des Slave-Controllers (50, 60-61214) in einer durch einen managenden User zum Steuern der Slave-Controller (50, 60-61214) definierten hierarchischen Gruppierungsarchitektur folgend automatisch eingestellt wird und für den Slave-Controller (50, 60-61214) identifizierbar sind,
wobei der Identifikationscode durch ein Identifikationserzeugungsmodul eines in einer Fernsteuervorrichtung (70) enthaltenen Steuermoduls (72) erzeugt wird, das es dem managenden User ermöglicht, die Identifikationscodes für jeweilige Slave-Controller (50, 60-61214) selbst einzustellen, wobei das Steuermodul (72) geeignet ist, den Betrieb des Slave-Controllers (50, 60-61214) mit einer Fähigkeit zur Durchführung einer Gruppensteuerung unter einer hierarchischen Gruppierungsarchitektur zu managen,
wobei die hierarchische Gruppierungsarchitektur das Verhältnis der Slave-Controller (50, 60-61214) in den hierarchischen Gruppen definiert und veränderbar durch den managenden User eingestellt wird, und die jeweiligen entsprechenden Identifikationscodes der Slave-Controller (50, 60-61214) durch den managenden User eingestellt werden.

11. Slave-Controller (50, 60-61214) nach Anspruch 10, bei welchem der Identifikationscode in den Slave-Controller (50, 60-61214) unter Steuerung durch den managenden User erfolgt, und der entsprechende Slave-Controller (50, 60-61214) seine Identitätsinformationen nicht senden muss, bevor er den zugeordneten Identifikationscode empfängt.

12. Slave-Controller (50, 60-61214) nach Anspruch 10, bei welchem der Identifikationscode verwendet wird, um einen jeweiligen Slave-Controller (60-61214) und eine hierarchische Gruppe (10, 20, 30, 12, 122, 1221), zu welcher der Slave-Controller in der hierarchischen Gruppierungsarchitektur gehört, zu steuern.

13. Hierarchisches drahtloses Strommanagementsystem mit:
mehrere Fernsteuervorrichtungen (70) nach einem der Ansprüche 1-9; und
mehrere Slave-Controller (50, 60-61214) nach einem der Ansprüche 10-12, und **dadurch gekennzeichnet, dass**
die Autoritäten der Fernsteuervorrichtungen eine höchste Managementautorität und eine mittlere Managementautorität der hierarchischen Architektur aufweist, um das Management einer Fernsteuervorrichtung mit mittlerer Managementautorität auf die Slave-Controller der autorisierten hierarchischen Gruppen in der hierarchischen Architektur zu begrenzen,
wobei eine Fernsteuervorrichtung mit der höchsten Managementautorität vorgesehen ist, um sämtliche Slave-Controller zu managen, und eine Fernsteuervorrichtung mit der mittleren Managementautorität auf eine hierarchische Gruppe beschränkt ist und keine andere hierarchische Gruppe steuern kann, für die sie nicht autorisiert ist.

14. Fernsteuerungsmanagementverfahren zum Managen des Betriebs mehrerer Slave-Controller (50, 60-61214), wobei das Fernsteuerungsmanagementverfahren aufweist:
einen Empfangsschritt zum Empfangen eines Auswahlsignals, das aus der Auswahl mindestens eines ausgewählten Slave-Controllers entsprechend Einstellungen resultiert, welche in der Fernsteuervorrichtung (70) bezüglich der mehreren Slave-Controller (50, 60-61214) gespeichert sind und den Slave-Controllern entsprechende Codes aufweisen; und
einen Steuerschritt zum Erzeugen eines Steuersignals, das mindestens einen Identifikationscode für mindestens einen ausgewählten Slave-Controller aufweist, um die Operationen des mindestens einen ausgewählten Slave-Controllers basierend auf dem Auswahlsignal und den Einstellungen drahtlos zu steuern, und **dadurch gekennzeichnet, dass**
die Einstellungen eine hierarchische Gruppierungsarchitektur aus mehreren hierarchischen Gruppen (10, 20, 30, 12, 122, 1221) aufweist, welche durch einen managenden User zum Steuern der Slave-Controller (50, 60-61214) definiert sind, und jeweilige entsprechende Identifikationscodes für die mehreren Slave-Controller (50, 60-61214), die jeweils eine Zufallszahl sind, welche einer Einstellung eines Slave-Controllers (50, 60-61214) folgend automatisch eingestellt wird und in der Lage ist, für mindestens einen der Slave-Controller (50, 60-61214) identifiziert zu werden,
wobei die hierarchische Gruppierungsarchitektur das Verhältnis der Slave-Controller (50, 60-61214) in den hierarchischen Gruppen definiert und veränderbar durch den managenden User eingestellt wird, und die jeweiligen entsprechenden Identifikationscodes der Slave-Controller (50, 60-61214) durch den managenden User eingestellt werden, und somit werden die Operationen der Slave-Controller (50, 60-61214) entsprechend der hierarchischen Gruppierungsarchitektur und den Identifikationscodes für jeweilige Slave-Controller (50, 60-61214) gesteuert,
wobei die Identifikationscodes durch ein Identifikationscodeerzeugungsmodul des Steuermoduls (72) zufällig erzeugt werden, wodurch dem managenden User ermöglicht ist, die Identifikationscodes für jeweilige Slave-Controller (50, 60-61214) selbst einzustellen,
wobei das Steuermodul (72) geeignet ist, die Operationen der Slave-Controller (50, 60-61214) mit einer Fähigkeit zur Durchführung einer Gruppensteuerung unter der hierarchischen Gruppierungsarchitektur zu managen.

## Revendications

1. Dispositif de contrôle à distance (70) permettant de contrôler une pluralité de contrôleurs esclaves (50, 60-61214), ledit dispositif de contrôle à distance (70) comprenant un module d'entrée (76) permettant de recevoir un signal de sélection résultant d'une sélection d'au moins un contrôleur esclave sélectionné selon des réglages qui sont stockés dans le dispositif de contrôle à distance (70), sont liés à la pluralité de contrôleurs esclaves (50, 60-61214) et ont des codes d'identification correspondant aux contrôleurs esclaves ; et
un module de contrôle (72) permettant de générer un signal de contrôle contenant au moins un code d'identification pour l'au moins un contrôleur esclave (50, 60-61214) sélectionné afin de contrôler sans fil des fonctionnements de l'au moins un contrôleur esclave sélectionné sur la base du signal de sélection et des réglages, et étant **caractérisé en ce que** :
les réglages comprennent une architecture de regroupement hiérarchique constituée par une pluralité de groupes hiérarchiques (10, 20, 30, 12, 122, 1221) définis par un utilisateur gestionnaire et permettant de contrôler les contrôleurs esclaves (50, 60-61214), et des codes d'identification correspondants respectifs pour la pluralité des contrôleurs esclaves (50, 60-61214), chacun étant un nombre aléatoire qui est réglé automatiquement en suivant un réglage d'un contrôleur esclave (50, 60-61214) et qui est capable d'être identifié pour au moins l'un des contrôleurs esclaves (50, 60-61214),
l'architecture de regroupement hiérarchique définissant la relation des contrôleurs esclaves (50, 60-61214) dans les groupes hiérarchiques, et étant réglée de manière variable par l'utilisateur gestionnaire et les codes d'identification correspondants respectifs des contrôleurs esclaves (50, 60-61214) étant réglés par l'utilisateur gestionnaire, et ainsi les fonctionnements des contrôleurs esclaves (50, 60-61214) étant contrôlés conformément à l'architecture de regroupement hiérarchique et aux codes d'identification pour des contrôleurs esclaves (50, 60-61214) respectifs,
les codes d'identification étant générés de manière aléatoire par un module de génération de code d'identification du module de contrôle (72), qui permet à l'utilisateur gestionnaire lui-même de régler les codes d'identification pour des contrôleurs esclaves (50, 60-61214) respectifs,
le module de contrôle (72) étant adapté pour gérer les fonctionnements des contrôleurs esclaves (50, 60-61214) avec la capacité d'effectuer un contrôle de groupe dans le cadre de l'architecture de regroupement hiérarchique.

2. Dispositif de contrôle à distance (70) selon la revendication 1, comprenant en outre :
un affichage (75) couplé électriquement audit module de contrôle (72) et permettant d'afficher une sélection ; et
un dispositif d'alimentation en puissance (73) couplé audit module de contrôle (72) et audit affichage (75), ledit module de contrôle (72) comprenant un circuit de traitement (721), un circuit de transmission de signal sans fil (723) et une unité de stockage (722), ledit circuit de transmission de signal sans fil (723) étant couplé audit circuit de traitement (721) et adapté pour la transmission dudit signal de contrôle à un contrôleur esclave (50, 60-61214) correspondant conformément au signal de sélection, ladite unité de stockage (722) étant couplée audit circuit de traitement (721) et permettant de stocker les réglages liés aux contrôleurs esclaves (50, 60-61214).

3. Dispositif de contrôle à distance (70) selon la revendication 1, dans lequel lesdits codes d'identification sont utilisés pour contrôler un contrôleur esclave (60-61214) respectif ou un groupe hiérarchique (10, 20, 30, 12, 122, 1221) auquel les contrôleurs esclaves (60-61214) appartiennent dans l'architecture de regroupement hiérarchique.

4. Dispositif de contrôle à distance (70) selon la revendication 3, dans lequel ledit module de contrôle (72) comprend le module de génération de code d'identification permettant de générer de manière aléatoire lesdits codes d'identification desdits contrôleurs esclaves (50, 60-61214) à régler dans les réglages et écrits dans lesdits contrôleurs esclaves (50, 60-61214) en conséquence après avoir terminé les réglages de ladite architecture de regroupement hiérarchique.

5. Dispositif de contrôle à distance (70) selon la revendication 1, dans lequel les réglages desdits contrôleurs esclaves (50, 60-61214) comportent une autorité de gestion hiérarchique pour permettre audit module de contrôle (72) de gérer certains groupes hiérarchiques dans ladite architecture de regroupement hiérarchique conformément à l'autorité de gestion hiérarchique.

6. Dispositif de contrôle à distance (70) selon la revendication 1, comprenant en outre une interface de connexion d'entrée/sortie (74) adaptée pour le réglage d'une relation de contrôle avec les contrôleurs esclaves initialement au moyen de la transmission des codes d'identification aux contrôleurs esclaves (50, 60-61214).

7. Dispositif de contrôle à distance (70) selon la revendication 1, dans lequel ledit module de contrôle (72) comprend en outre une fonction de contrôle de commutation locale permettant de contrôler directement un contrôleur esclave (50, 60-61214) à proximité du dispositif de contrôle à distance (70) à l'aide d'un signal de contrôle activé par un bouton local (761) sans avoir besoin de sélectionner le contrôleur esclave.

8. Dispositif de contrôle à distance (70) selon la revendication 7, dans lequel une puissance de transmission du signal de contrôle dudit dispositif de contrôle à distance (70) dans ladite fonction de contrôle de commutation locale est inférieure à celle d'un signal de contrôle permettant de contrôler un contrôleur esclave (50, 60-61214) spécifiquement sélectionné.

9. Dispositif de contrôle à distance (70) selon la revendication 7, dans lequel ladite fonction de contrôle de commutation locale est limitée aux contrôleurs esclaves (50, 60-61214) dans un groupe hiérarchique spécifique (12, 122, 1221) de ladite architecture de regroupement hiérarchique.

10. Contrôleur esclave (50, 60-61214) comprenant :
un connecteur d'entrée de puissance (52) ; une interface d'écriture (54) pour permettre à un utilisateur gestionnaire d'entrer un code d'identification pour le contrôleur esclave (50, 60-61214) ; et une unité de fonctionnement (55) connectant ledit connecteur d'entrée de puissance (52) et ladite interface d'écriture (54), ladite unité de fonctionnement (55) comprenant un circuit de traitement de signal (552), un circuit de commutation (553) et un circuit récepteur de signal sans fil (554), ledit circuit de traitement de signal (552) étant adapté pour stocker ledit code d'identification, ledit circuit de commutation (553) connectant ledit circuit de traitement de signal (552) et ledit connecteur d'entrée de puissance (52), ledit circuit récepteur de signal sans fil (554) étant adapté pour recevoir un signal de contrôle correspondant audit code d'identification et connecté électriquement audit circuit de traitement de signal (552), ledit circuit de traitement de signal (552) étant adapté pour réguler le fonctionnement dudit circuit de commutation (553) et effectuer une sortie conformément audit signal de contrôle, étant **caractérisé en ce que**
le code d'identification est un nombre aléatoire qui est réglé automatiquement en suivant un réglage du contrôleur esclave (50, 60-61214) dans une architecture de regroupement hiérarchique définie par un utilisateur gestionnaire pour contrôler le contrôleur esclave (50, 60-61214) et est capable d'être identifié pour le contrôleur esclave (50, 60-61214),
le code d'identification étant généré de manière aléatoire par un module de génération de code d'identification d'un module de contrôle (72) compris dans un dispositif de contrôle à distance (70), qui permet à l'utilisateur gestionnaire lui-même de régler le code d'identification pour le contrôleur esclave (50, 60-61214),
le module de contrôle (72) étant adapté pour gérer le fonctionnement du contrôleur esclave (50, 60-61214) avec la capacité d'effectuer un contrôle de groupe dans le cadre d'une architecture de regroupement hiérarchique,
l'architecture de regroupement hiérarchique définissant la relation de contrôleurs esclaves (50, 60-61214) dans les groupes hiérarchiques, et étant réglée de manière variable par l'utilisateur gestionnaire et les codes d'identification correspondants respectifs des contrôleurs esclaves (50, 60-61214) étant réglés par l'utilisateur gestionnaire.

11. Contrôleur esclave (50, 60-61214) selon la revendication 10, dans lequel le code d'identification est entré dans le contrôleur esclave (50, 60-61214) dans le cadre d'un contrôle de l'utilisateur gestionnaire et le contrôleur esclave (50, 60-61214) correspondant n'a pas besoin d'envoyer ses informations d'identité avant de recevoir le code d'identification attribué.

12. Contrôleur esclave (50, 60-61214) selon la revendication 10, dans lequel ledit code d'identification est utilisé pour contrôler le contrôleur esclave (60-61214) respectif et un groupe hiérarchique (10, 20, 30, 12, 122, 1221) auquel le contrôleur esclave appartient dans l'architecture de regroupement hiérarchique.

13. Système de gestion de puissance sans fil hiérarchique, comprenant :
une pluralité de dispositifs de contrôle à distance (70) selon l'une quelconque des revendications 1 à 9 ; et
une pluralité de contrôleurs esclaves (50, 60-61214) selon l'une quelconque des revendications 10 à 12 et étant **caractérisé en ce que**
les autorités des dispositifs de contrôle à distance comprennent une autorité de gestion la plus élevée et une autorité de gestion intermédiaire de l'architecture hiérarchique, de manière à limiter la gestion d'un dispositif de contrôle à distance avec l'autorité de gestion intermédiaire aux contrôleurs esclaves des groupes hiérarchiques autorisés dans l'architecture hiérarchique,
un dispositif de contrôle à distance ayant l'autorité de gestion la plus élevée étant fourni pour gérer tous les contrôleurs esclaves, et un dispositif de contrôle à distance ayant l'autorité de gestion intermédiaire étant limité à un groupe hiérarchique et ne pouvant pas contrôler un autre groupe hiérarchique pour lequel il n'est pas autorisé.

14. Procédé de gestion de contrôle à distance permettant de gérer le fonctionnement d'une pluralité de contrôleurs esclaves (50, 60-61214), le procédé de gestion de contrôle à distance comprenant :
une étape de réception permettant de recevoir un signal de sélection résultant d'une sélection d'au moins un contrôleur esclave sélectionné selon des réglages qui sont stockés dans un dispositif de contrôle à distance (70), liés à la pluralité de contrôleurs esclaves (50, 60-61214), et ont des codes d'identification correspondant aux contrôleurs esclaves ; et
une étape de contrôle permettant de générer un signal de contrôle contenant au moins un code d'identification pour au moins un contrôleur esclave sélectionné afin de contrôler sans fil des fonctionnements de l'au moins un contrôleur esclave sélectionné, sur la base du signal de sélection et des réglages, et étant **caractérisé en ce que**
les réglages comprennent une architecture de regroupement hiérarchique constituée par une pluralité de groupes hiérarchiques (10, 20, 30, 12, 122, 1221) définis par un utilisateur gestionnaire et permettant de contrôler les contrôleurs esclaves (50, 60-61214), et des codes d'identification correspondants respectifs pour la pluralité des contrôleurs esclaves (50, 60-61214), chacun étant un nombre aléatoire qui est réglé automatiquement en suivant un réglage d'un contrôleur esclave (50, 60-61214) et qui est capable d'être identifié pour au moins l'un des contrôleurs esclaves (50, 60-61214),
l'architecture de regroupement hiérarchique définissant la relation des contrôleurs esclaves (50, 60-61214) dans les groupes hiérarchiques, et étant réglée de manière variable par l'utilisateur gestionnaire et les codes d'identification correspondants respectifs des contrôleurs esclaves (50, 60-61214) étant réglés par l'utilisateur gestionnaire, et ainsi les fonctionnements des contrôleurs esclaves (50, 60-61214) étant contrôlés conformément à l'architecture de regroupement hiérarchique et aux codes d'identification pour des contrôleurs esclaves (50, 60-61214) respectifs,
les codes d'identification étant générés de manière aléatoire par un module de génération de code d'identification du dispositif de contrôle à distance (70), qui permet à l'utilisateur gestionnaire lui-même de régler les codes d'identification pour des contrôleurs esclaves (50, 60-61214) respectifs,
le dispositif de contrôle à distance (70) gérant les fonctionnements des contrôleurs esclaves (50, 60-61214) avec la capacité d'effectuer un contrôle de groupe dans le cadre de l'architecture de regroupement hiérarchique.
